# EUROPÄISCHE PATENTSCHRIFT

(11) **EP 2 814 122 B1**
(45) Veröffentlichungstag und Bekanntmachung des Hinweises auf die Patenterteilung: **10.10.2018**
(21) Anmeldenummer: 14163025.1
(22) Anmeldetag: 01.04.2014
(51) Int. Cl.: H01R 39/04, H01R 43/06, H02K 13/04

(54) **Verfahren zur Herstellung eines Kollektors für eine Kommutierungseinrichtung**
Method for producing a collector for a commutation device
Procédé de production d'un collecteur pour un dispositif de commutation

(30) Priorität: 30.04.2013 DE 102013207884
(43) Veröffentlichungstag der Anmeldung: 17.12.2014
(73) Patentinhaber: SEG Automotive Germany GmbH, 70499 Stuttgart (DE)
(72) Erfinder: Ramsayer, Reiner, 71277 Rutesheim (DE); Overmeier, Sarah, 71638 Ludwigsburg (DE); Winkler, Jens, 30900 Wedemark (DE)
(74) Vertreter: Steinbauer, Florian

(56) Entgegenhaltungen:
- WO-A1-88/06356
- DE-A1- 1 934 213
- DE-A1-102011 083 901
- Wikipedia: "Magnetic pulse welding", , 16. April 2013 (2013-04-16), XP002759240, Gefunden im Internet: URL:https://en.wikipedia.org/w/index.php?t itle=Magnetic_pulse_welding&oldid=55065870 9 [gefunden am 2016-06-27]

## Beschreibung

Die Erfindung bezieht sich auf ein Verfahren zur Herstellung eines Kollektors für eine Kommutierungseinrichtung zur Stromübertragung auf einen Anker einer elektrischen Maschine.

### Stand der Technik

Bekannt sind elektrische Startermotoren in Startvorrichtungen, die zum Starten einer Brennkraftmaschine eingesetzt werden. Die Startermotoren sind beispielsweise als Gleichstrommotor mit Permanenterregung ausgeführt und weisen eine Kommutierungseinrichtung zur Stromübertragung und -wendung auf den im Startermotor rotierend gelagerten Anker auf. Die Kommutierungseinrichtung umfasst einen ankerseitigen Kommutatorläufer bzw. Kollektor und mehrere, an dem Kollektor anliegende Kohlebürsten, die jeweils von einer Bürstenfeder radial auf die Mantelfläche des Kollektors beaufschlagt sind. Über den Umfang verteilt weist der Kollektor mehrere Lamellen auf, an denen die Bürsten zur Übertragung des Stroms auf die Ankerwicklungen anliegen.

Bei einem in der DE 10 2007 058 911 A1 beschriebenen Startermotor weist der Kollektor Lamellen aus Kupfer auf, an die elektrisch die Ankerwicklungen angeschlossen sind, welche aus Aluminium bestehen. Die Enden der Aluminiumleiter weisen einen Leitungsabschnitt aus Kupfer in Form einer Kontakthülse auf, die an die Lamellen angeschlossen ist, um eine Korrosion an den Enden der Aluminiumleiter zu vermeiden.

Aus dem Dokument DE 10 2011 083 901 A1 ist bekannt, einen Kollektor aus verschiedenen Materialien aufzubauen. Für einen Kontaktabschnitt wird Kupfer oder eine Kupferlegierung verwendet, für einen Verbindungsabschnitt wird vorgeschlagen Aluminium, Zink oder eine entsprechende Legierung zu verwenden. Die Verbindung der unterschiedlichen Abschnitte und ihrer unterschiedlichen Materialien erfolgt gemäß dem dort offenbarten Vorschlag mittels eines Sinterverfahrens.

Aus dem Dokument WO88/06356 A1 ist ein Herstellungsverfahren zur Herstellung eines Kollektors offenbart, der einen Kontaktabschnitt für Bürsten aus Kupfer mit einem Verbindungsabschnitt aus Aluminium offenbart. Hierzu wird in einer Vorstufe der Fertigung ein Aluminiumrohr über einem Kupferrohr angeordnet und diese zwei Rohre mittels eines speziellen Verbindungsverfahrens miteinander fest verbunden. Das spezielle Verbindungsverfahren nutzt dabei Kräfte, die durch eine Explosion entstehen.

### Offenbarung der Erfindung

Der Erfindung liegt die Aufgabe zugrunde, einen Kollektor für eine Kommutierungseinrichtung mit einfachen Maßnahmen bei reduziertem Gewicht herzustellen. Gemäß bevorzugter Ausführung enthält der Kontaktabschnitt Kupfer oder Messing und der Verbindungsabschnitt Aluminium oder Zink. Der Kupfer- bzw. Messingabschnitt befindet sich somit auf der außen liegenden Seite der Lauffläche am Kollektor und dient zur Kontaktierung mit den stromleitenden Bürsten. Der Aluminium- bzw. Zinkabschnitt ist mit dem Kupfer- bzw. Messingabschnitt elektrisch verbunden und steht außerdem elektrisch mit einer Ankerwicklung in Kontakt. Somit dient der Aluminium- bzw. Zinkabschnitt als elektrischer Leiter zwischen dem Kupfer- bzw. Messingabschnitt und den Ankerwicklungen. Der Kupfer- bzw. Messingabschnitt umgreift den Aluminium- bzw. Zinkabschnitt. Der Aluminium- bzw. Zinkabschnitt weist einen größeren Durchmesser als der Kupfer- bzw. Messingabschnitt auf.

Diese Aufgabe wird erfindungsgemäß mit den Merkmalen des Anspruches 1 gelöst. Die Unteransprüche geben zweckmäßige Weiterbildungen an.

Der nach dem erfindungsgemäßen Verfahren hergestellte Kollektor bzw. Kommutator ist Teil einer Kommutierungseinrichtung zur Stromübertragung auf einen Anker einer elektrischen Maschine. Bei der elektrischen Maschine handelt es sich beispielsweise um einen Startermotor für eine Startvorrichtung, über die eine Brennkraftmaschine gestartet werden kann. Die elektrische Maschine kann zum Beispiel als ein Gleichstrommotor mit Permanenterregung oder mit elektrischer Erregung ausgeführt sein. Die elektrische Maschine ist bevorzugt als Innenläufer-Elektromotor ausgebildet.

Der Kollektor ist mit der Rotorwelle der elektrischen Maschine verbunden. Über den Kollektor werden die Rotor- bzw. Ankerspulen im Anker bestromt. Der Kollektor weist über den Umfang eine Mehrzahl einzelner Lamellen auf, die jeweils elektrisch mit einer Ankerspule verbunden sind und an denen die federkraftbeaufschlagten Bürsten anliegen. Der Kollektor ist aus zwei verschiedenen Materialpaarungen aufgebaut und weist einen mit einer Bürste in Kontakt stehenden Kontaktabschnitt und einen mit einer Ankerwicklung verbundenen Verbindungsabschnitt auf, wobei der Kontaktabschnitt und der Verbindungsabschnitt aus unterschiedlichen Materialen bestehen. Jede Lamelle umfasst einen Kontaktabschnitt und einen Verbindungsabschnitt. Indem Kontaktabschnitt und Verbindungsabschnitt aus unterschiedlichen Materialien bestehen, ist eine Anpassung an unterschiedliche Erfordernisse möglich. Der Kontaktabschnitt kann an den Schleifkontakt mit den Bürsten angepasst werden. Für den Verbindungsabschnitt, welcher den elektrischen Kontakt zu der Ankerwicklung herstellt, kann ein leichteres Material gewählt werden, so dass insgesamt das Gewicht des Kollektors reduziert werden kann.

Gemäß einer vorteilhaften Ausführung weist das Material des Kontaktabschnitts eine gleich große oder höhere elektrische Leitfähigkeit auf als das Material des Verbindungsabschnitts. Zusätzlich oder alternativ kann das Material des Kontaktabschnitts eine größere Dichte aufweisen als das Material des Verbindungsabschnitts. Des Weiteren ist es möglich, dass das Material des Kontaktabschnitts eine größere Härte aufweist als das Material des Verbindungsabschnitts.

Die Abschnitte aus den verschiedenen Materialien sind zu den einzelnen Kommutatorlamellen mit je einem Kontaktabschnitt und einem Verbindungsabschnitt unterteilt, die sich jeweils in Achsrichtung erstrecken, wobei über den Umfang eine Mehrzahl derartiger Lamellen am Kollektor angeordnet ist. Die Lamellen sind über den Verbindungsabschnitt jeweils elektrisch mit einer Ankerspule verbunden. Im Bereich der Laufbahn der Bürsten können die Kommutatorlamellen im Kontaktabschnitt aus Kupfer bzw. Messing bestehen, so dass insoweit ein bewährter Kontakt zwischen den Bürsten und den Lamellen gegeben ist. Der Aluminium- bzw. Zinkabschnitt hat dagegen den Vorteil, dass es sich um ein spezifisch leichteres Material als Kupfer oder Messing handelt, wodurch die Masse und das Trägheitsmoment des Kollektors reduziert sind, was mit einer Verringerung von Fliehkräften bzw. einer Erhöhung der Beschleunigung einhergeht.

Der Aluminium- bzw. Zinkabschnitt kann entweder vollständig aus Aluminium bzw. Zink bestehen oder einen Anteil an Aluminium bzw. Zink aufweisen. In entsprechender Weise kann der Kupfer- bzw. Messingabschnitt entweder vollständig aus Kupfer bzw. Messing bestehen oder einen Kupfer- bzw. Messinganteil aufweisen. Der Anteil des jeweiligen Materials Aluminium bzw. Zink einerseits und Kupfer bzw. Messing andererseits beträgt vorteilhafterweise mindestens 50 %.

Bei dem Verfahren zur Herstellung des Kollektors werden zwei ring- oder hülsenförmige, ineinandergesteckte Abschnitte - der Kontaktabschnitt und der Verbindungsabschnitt - aus unterschiedlichen Materialien miteinander verbunden. Nach Abschluss des Verbindungsprozesses können im Kollektor die Lamellen durch Vereinzelung bzw. Auftrennen von Segmenten in Achsrichtung erzeugt werden.

Ein erster Abschnitt besteht vorzugsweise aus Kupfer oder Messing, ein zweiter Abschnitt vorzugsweise aus Aluminium oder Zink. Die Verbindung der jeweils ring- oder hülsenförmigen Abschnitte erfolgt in der Weise, dass beide Abschnitte, die mit unterschiedlichem Durchmesser versehen sind, zunächst ineinandergesteckt werden und anschließend der Aluminium- bzw. Zinkabschnitt radial in Richtung des Kupfer- bzw. Messingabschnitts verformt wird. Im Kontaktbereich zwischen den Abschnitten erfolgt hierdurch eine zumindest kraftschlüssige, gegebenenfalls auch stoffschlüssige Verbindung. Bei einem nur verhältnismäßig geringen Verformen des Aluminium- bzw. Zinkabschnitts ist die Verbindung kraftschlüssig, bei einem stärkeren radialen Verformen dagegen stoffschlüssig, da im Bereich der Kontaktfläche ein Verschweißen zwischen den unterschiedlichen Abschnitten erfolgt. In jedem Fall ist eine hinreichend stabile Verbindung zwischen den verschiedenen Abschnitten gegeben.

Da der Aluminium- bzw. Zinkabschnitt aus einem verhältnismäßig weichen Material besteht und gegebenenfalls dieser Abschnitt verhältnismäßig dünnwandig ausgebildet sein kann, sind die für die Verformung erforderlichen Kräfte entsprechend reduziert. Der verhältnismäßig dickwandige Kupfer- bzw. Messingabschnitt, welcher zudem aus einem härteren Material besteht, muss dagegen zum Herstellen der Verbindung nicht verformt werden. Somit ist auch der Energieaufwand, der für die Verbindung erforderlich ist, reduziert. Auch plastische Verformungen der Fügepartner, also der Abschnitte aus Kupfer bzw. Messing und Aluminium bzw. Zink, sind reduziert. Während des Verbindüngsprozesses wird vorzugsweise ausschließlich der Aluminium- bzw. Zinkabschnitt einer Verformung durch Beaufschlagung in Radialrichtung unterzogen, nicht jedoch der Kupfer- bzw. Messingabschnitt.

Es kommen verschiedene Möglichkeiten in Betracht, den Durchmesser des Aluminium- bzw. Zinkabschnitts zu ändern. Gemäß einer vorteilhaften Ausführung ist vorgesehen, dass die Verformung des Aluminium- bzw. Zinkabschnitts durch Electromagnetic Pulse Welding (EMPW) erfolgt, bei dem es sich um einen Schweißprozess unter Ausnutzung von magnetischen Kräften zwischen den zusammenzufügenden Bauteilen handelt. Bei dieser Magnetumformung wird ein hohes, gepulstes Magnetfeld in dem Aluminium- bzw. Zinkäbschnitt berührungslos erzeugt und der Durchmesser des Aluminium- bzw. Zinkabschnitts verändert.

Es kann zweckmäßig sein, den Kupfer- bzw. Messingabschnitt auf der dem Aluminium- bzw. Zinkabschnitt abgewandten Seite von einem Formwerkzeug abzustützen, über das die radialen Kräfte, die beim Umformen des Aluminium- bzw. Zinkabschnitts entstehen, aufgenommen werden. Auf diese Weise wird zum einen eine Durchmesseränderung des Kupfer- bzw. Messingabschnittes während des Herstellungsprozesses vermieden, zum andern kann die Oberfläche des Kupfer- bzw. Messingabschnittes bereits während des Verbindungsprozesses mit dem Aluminium- bzw. Zinkabschnitt der späteren Kollektoroberfläche entsprechend ausgeformt werden, wodurch sich der Materialeinsatz und der nachfolgende Bearbeitungsaufwand reduzieren lassen. Die Abstützung über das Formwerkzeug wird insbesondere für den Fall durchgeführt, dass der Aluminium-bzw. Zinkabschnitt radial innen liegt und zum Herstellen der Verbindung mit dem Kupfer- bzw. Messingabschnitt radial aufgeweitet wird.

Der Kupfer- bzw. Messingabschnitt ist vorteilhafterweise hülsenförmig ausgebildet, um eine ausreichend große Lauffläche für die anliegenden Bürsten zu bilden. Der Aluminium- bzw. Zinkabschnitt ist entweder hülsen- oder ringförmig ausgebildet. Bei radial innen liegender Ausführung kann der hülsenförmige Aluminium- bzw. Zinkabschnitt zusätzlich einen stirnseitigen Kragen aufweisen, der einen größeren Durchmesser aufweist und eine Anschlagsfläche für den radial außen liegenden Kupfer- bzw. Messingabschnitt bildet.

Weitere Vorteile und zweckmäßige Ausführungen sind den weiteren Ansprüchen, der Figurenbeschreibung und den Zeichnungen zu entnehmen. Es zeigen:
- Fig. 1: eine Startvorrichtung für eine Brennkraftmaschine im Längsschnitt, mit einem elektrischen Startermotor, der mit einer Kommutierungseinrichtung versehen ist,
- Fig. 2: eine schematische Darstellung des Verbindungsvorgangs eines Aluminiumrings mit einer Messinghülse für den Kollektor der Kommutierungseinrichtung, dargestellt im nichtverbundenen und im verbundenen Zustand,
- Fig. 3: in einer Ausführungsvariante eine Messinghülse und eine Aluminiumhülse eines Kollektors, ebenfalls dargestellt im nichtverbundenen und im verbundenen Zustand.

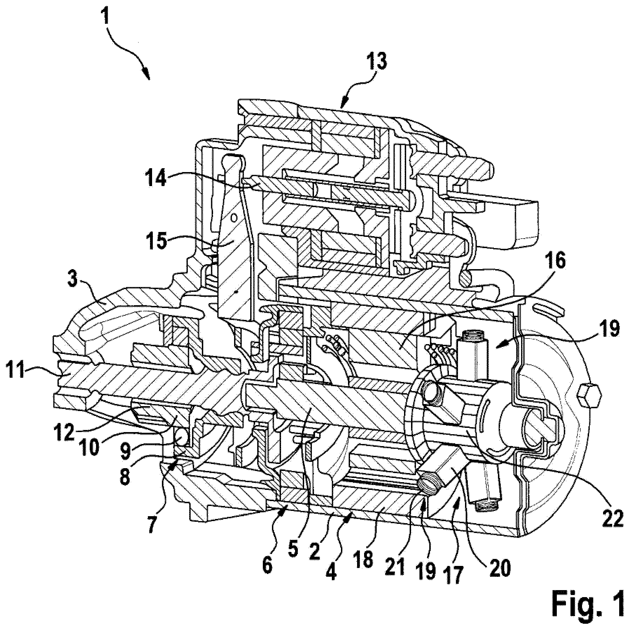

In Fig. 1 ist eine Startvorrichtung 1 für eine Brennkraftmaschine dargestellt, die in einem Gehäuse 2, welches einen vorne liegenden Lagerschild 3 aufweist, einen elektrischen Startermotor aufnimmt. Die Motorwelle 5 des Startermotors 4 treibt über ein Planetengetriebe 6 eine Antriebswelle 11 an, auf der ein Mitnehmer 8 einer Freilaufeinrichtung 7 axial verschieblich, jedoch in Drehrichtung mit der Antriebswelle 11 gekoppelt angeordnet ist. Der Mitnehmer 8 stützt sich über Stützrollen 9 an einem Rollenbund 10 ab, der einteilig mit einem Starterritzel 12 ausgebildet ist. Bei einer axialen Vorschubbewegung gelangt das Starterritzel 12 aus einer zurückgezogenen Außerbetriebsstellung in eine vorgerückte Eingriffsstellung mit dem Zahnkranz einer Brennkraftmaschine.

Die axiale Vorschubbewegung des Starterritzels 12 wird mithilfe eines elektromagnetischen Starterrelais 13 durchgeführt, das einen axial verstellbaren Hubanker 14 aufweist, welcher mit einem Gabelhebel 15 gekoppelt ist. Bei einer axialen Stellbewegung des Hubankers 14 wird der am Gehäuse gelagerte Gabelhebel 15 verschwenkt, wodurch der Mitnehmer 8 einschließlich Starterritzel 12 in Achsrichtung verstellt wird.

Der elektrische Startermotor 4 ist als Innenläufermotor ausgebildet und weist einen drehfest mit der Motorwelle 5 verbundenen Anker 16 auf, welcher elektrisch erregbare Ankerspulen enthält. Die Spulen im Anker 16 werden über eine Kommutierungseinrichtung 17 bestromt. Das von den elektrischen Ankerspulen erzeugte elektromagnetische Feld interagiert mit dem Magnetfeld von Permanentmagneten 18, die an der Innenseite des den Anker umgreifenden Stators angeordnet sind.

Die Kommutierungseinrichtung 17 weist mehrere Feder-Bürste-Einheiten 19 auf, die jeweils gehäuseseitig eine Kohlebürste 20 und eine Bürstenfeder 21 umfassen, sowie einen ankerseitigen Kollektor 22. Die Kohlebürsten 20 werden von den Bürstenfedern 21 radial gegen die Mantelfläche des Kollektors 22 kraftbeaufschlagt. Kohlebürsten 20 und Bürstenfedern 21 sind zweckmäßigerweise in Bürstenhalterungen aufgenommen, die fest mit dem Gehäuse des Startermotors verbunden sind. Über den Umfang gleichmäßig verteilt sind insgesamt sechs Feder-Bürste-Einheiten 19 vorgesehen.

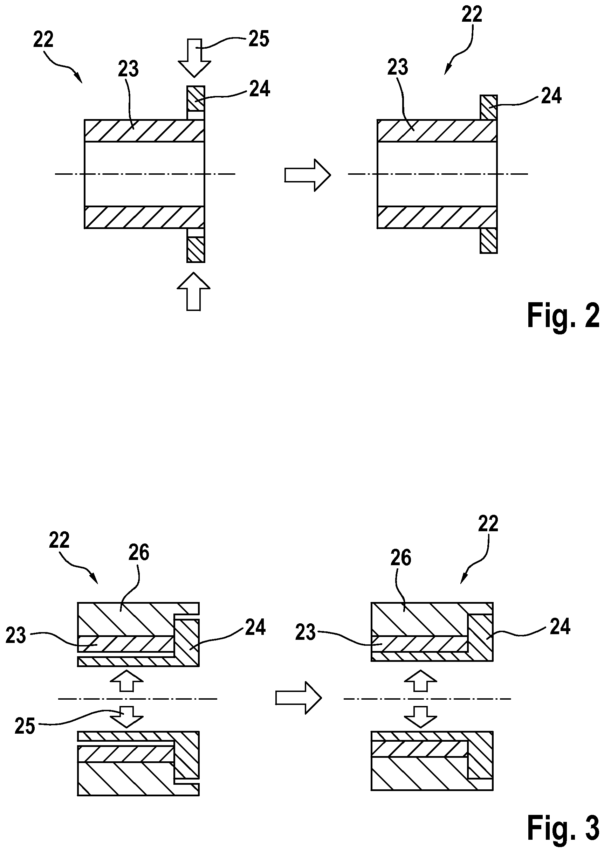

In Fig. 2 ist der Kollektor 22 im Herstellungsprozess mit den wesentlichen Bestandteilen dargestellt, nämlich einem hülsenförmigen Kupferabschnitt 23 und einem ringförmigen Aluminiumabschnitt 24. Die Bauteile 23 und 24 gehören zum Kollektor 22, der Bestandteil der Kommutierungseinrichtung ist. Der Kupferabschnitt 23 bildet die Lauffläche, an der die Bürsten zur Stromübertragung auf Kontakt anliegen. Der ringförmige Aluminiumabschnitt 24 wird mit dem Kupferabschnitt 23 verbunden und dient zur Stromweiterleitung auf die Ankerwicklungen. Der Kupferabschnitt 23 erfährt nach der Verbindung mit dem Aluminiumabschnitt 24 eine Vereinzelung in Kollektorlamellen, die durch Axialspalte voneinander separiert sind, wobei über den Umfang verteilt eine Mehrzahl derartiger Lamellen aus dem Kupferabschnitt 23 entstehen. Der Aluminiumabschnitt 24 ist als durchgehender Ring ausgeführt, der einen größeren Innendurchmesser aufweist als der Außendurchmesser des Kupferabschnittes 23.

Die Verbindung zwischen dem Aluminiumabschnitt 24 und dem Kupferabschnitt 23 erfolgt durch Magnetumformung im Wege des Electromagnetic Pulse Welding (EMPW). Hierfür wird ein EMPW-Werkzeug 25 an der Außenseite des ringförmigen Aluminiumabschnitts 24 entlangbewegt und ein starkes, gepulstes Magnetfeld im Aluminiumabschnitt 24 erzeugt. Der Aluminiumabschnitt 24 erfährt hierdurch eine Formänderung; der Durchmesser reduziert sich, so dass wie in Fig. 2 dargestellt, der größere Durchmesser des Aluminiumrings 24 (linke Bildhälfte) in einen kleineren Durchmesser (rechte Bildhälfte) reduziert wird und der Innendurchmesser des Aluminiumrings 24 auf Kontakt zur Mantelfläche im Bereich der Stirnseite des Kupferabschnitts 23 steht. Die Verbindung erfolgt vorzugsweise auf stoffschlüssige Weise, indem die Grenzschichten der Abschnitte 23, 24 miteinander kalt verschweißt werden.

In Fig. 3 ist eine Ausführungsvariante zur Herstellung eines Kollektors 22 dargestellt. Auch im Beispiel gemäß Fig. 3 weist der Kollektor 22 einen hülsenförmigen Kupferabschnitt 23 und einen Aluminiumabschnitt 24 auf, der jedoch ebenfalls hülsenförmig ausgebildet ist und einen kleineren Durchmesser als der kupferabschnitt 23 aufweist. Die Hülse des Aluminiumabschnittes 24 ist in den Kupferabschnitt 23 eingesteckt und weist im Ausgangszustand (linke Bildhälfte) einen kleineren Außendurchmesser auf als der Innendurchmesser des Kupferabschnittes 23. Einteilig angeformt ist am Aluminiumabschnitt 24 zudem ein radial erweiterter, stirnseitiger Kragen, der eine Stützfläche für die Stirnseite des Kupferabschnittes 23 bildet.

Die Verbindung zwischen Kupferabschnitt 23 und Aluminiumabschnitt 24 erfolgt ebenfalls durch Magnetumformung im Wege des Electromagnetic Pulse Welding (EMPW), wofür ein EMPW-Werkzeug 25 eingesetzt wird. Das Werkzeug 25 wird in das Innere des hülsenförmigen Aluminiumabschnittes 24 eingeführt. Hierdurch erfährt der Aluminiumabschnitt 24 im Bereich seiner Hülse eine radiale Aufweitung und legt sich an den Innenmantel des Kupferabschnittes 23 an. Im Bereich der Grenzfläche zwischen den Abschnitten 23, 24 erfolgt eine Verbindung durch Kaltverschweißen.

Zusätzlich wird während des Verbindungsprozesses ein Formwerkzeug 26 eingesetzt, das auf die Außenseite des Kupferabschnittes 23 gelegt ist und diese radial nach außen abstützt. Dadurch wird zum einen vermieden, dass während des Aufweitungsprozesses des Aluminiumabschnittes 24 auch der Kupferabschnitt 23 eine radiale Aufweitung erfährt. Zum andern wird die Außenseite des Kupferabschnittes 23 bereits endkonturnah an die spätere Kollektoroberfläche ausgeformt, wodurch sich der Materialeinsatz und ein nachfolgender Bearbeitungsaufwand reduziert.

## Patentansprüche

1. Verfahren zur Herstellung eines Kollektors (22) für eine Kommutierungseinrichtung (17) zur Stromübertragung auf einen Anker (16) einer elektrischen Maschine, insbesondere eines Startermotors (4) für eine Brennkraftmaschine, bei dem ein ring- oder hülsenförmiger, mit einer Bürste in Kontakt zu bringender Kontaktabschnitt (23) des Kollektors (22) und ein ring- oder hülsenförmiger, mit einer Ankerwicklung zu verbindender Verbindungsabschnitt (24) des Kollektors (22) mit unterschiedlichen Durchmessern ineinandergesteckt werden, wobei der Kontaktabschnitt (23) und der Verbindungsabschnitt (24) aus unterschiedlichen Materialen bestehen, und nach dem Ineinanderstecken der Kontaktabschnitt (23) und/oder der Verbindungsabschnitt (24) radial in Richtung des anderen Abschnitts verformt werden, wobei der Kontaktabschnitt (23) Kupfer oder Messing und der Verbindungsabschnitt (24) Aluminium oder Zink enthält, **dadurch gekennzeichnet, dass** der Kupfer- bzw. Messingabschnitt (23) den Aluminium- bzw. Zinkabschnitt (24) radial umgreift und der Außendurchmesser des innenliegenden Aluminium- bzw. Zinkabschnitts (24) vergrößert wird.

2. Verfahren nach Anspruch 1, **dadurch gekennzeichnet, dass** das Material des Kontaktabschnitts (23) eine gleich große oder höhere elektrische Leitfähigkeit aufweist als das Material des Verbindungsabschnitts (24).

3. Verfahren nach Anspruch 1 oder 2, **dadurch gekennzeichnet, dass** das Material des Kontaktabschnitts (23) eine größere Dichte aufweist als das Material des Verbindungsabschnitts (24).

4. Verfahren nach einem der Ansprüche 1 bis 3, **dadurch gekennzeichnet, dass** das Material des Kontaktabschnitts (23) eine größere Härte aufweist als das Material des Verbindungsabschnitts (24).

5. Verfahren nach Anspruch 1, **dadurch gekennzeichnet, dass** die Verformung des Aluminium- bzw. Zinkabschnitts (24) durch Electromagnetic Pulse Welding (EMPW) erfolgt.

6. Verfahren nach Anspruch 1 oder 5, **dadurch gekennzeichnet, dass** der Aluminium- bzw. Zinkabschnitt (24) den Kupfer- bzw. Messingabschnitt (23) radial umgreift und der Innendurchmesser des Aluminium- bzw. Zinkabschnitts (24) verringert wird.

7. Verfahren nach Anspruch 1, **dadurch gekennzeichnet, dass** der Kupfer- bzw. Messingabschnitt (23) auf der dem Aluminium- bzw. Zinkabschnitt (24) abgewandten Seite von einem Formwerkzeug (26) abgestützt wird.

8. Verfahren nach einem der Ansprüche 1, 6 oder 7, **dadurch gekennzeichnet, dass** der Aluminium- bzw. Zinkabschnitt (24) ringförmig und der Kupfer- oder Messingabschnitt (23) hülsenförmig ausgebildet ist.

9. Verfahren nach einem der Ansprüche 1, 6 oder 7, **dadurch gekennzeichnet, dass** sowohl der Aluminium- bzw. Zinkabschnitt (24) als auch der Kupfer- bzw. Messingabschnitt (23) hülsenförmig ausgebildet sind, wobei der Aluminium- bzw. Zinkabschnitt (24) einen stirnseitigen Kragen mit vergrößertem Außendurchmesser aufweist.

10. Verfahren nach einem der Ansprüche 1, 6 und 7 bis 9, **dadurch gekennzeichnet, dass** nach der radialen Durchmesserverjüngung bzw. - aufweitung des Aluminium- bzw. Zinkabschnitts (24) Kollektorlamellen durch Auftrennen des Kupfer- bzw. Messingabschnitts (25) und ggf. des Aluminium- bzw. Zinkabschnitts (24) erzeugt werden.

## Claims

1. A method for producing a collector (22) for a commutation device (17) for transmitting current to an armature (16) of an electrical machine, in particular of a starter motor (4) for an internal combustion engine, in which a ring-shaped or sleeve-shaped contact portion (23) of the collector (22) to be brought into contact with a brush, and a ring-shaped or sleeve-shaped connecting portion (24) of the collector (22) to be connected with an armature winding, having different diameters, are slotted together other, wherein the contact portion (23) and the connecting portion (24) are made of different materials, and after slotting, the contact portion (23) and/or the connecting portion (24) are deformed radially toward the other portion, wherein the contact portion (23) contains copper or brass and the connecting portion (24) contains aluminium or zinc,
**characterized in that**
the copper or brass portion (23) radially surrounds the aluminium or zinc portion (24) and the outer diameter of the inner aluminium or zinc portion (24) is increased.

2. A method according to claim 1, **characterised in that** the material of the contact portion (23) has a same or higher electrical conductivity than the material of the connecting portion (24).

3. A method according to claim 1 or 2, **characterised in that** the material of the contact portion (23) has a greater density than the material of the connecting portion (24).

4. A method according to any one of claims 1 to 3, **characterised in that** the material of the contact portion (23) has a greater hardness than the material of the connecting portion (24).

5. The method according to claim 1, **characterised in that** the deformation of the aluminium or zinc portion (24) is performed by electromagnetic pulse welding (EMPW).

6. A method according to claim 1 or 5, characterised that the aluminium or zinc portion (24) radially surrounds the copper or brass portion (23) and the inner diameter of the aluminium or zinc portion (24) is reduced.

7. A method according to claim 1, **characterised in that** the copper or brass portion (23) is supported by a forming tool (26) on the side facing away from the aluminium or zinc portion (24).

8. A method according to any one of claims 1, 6 or 7, **characterised in that** the aluminium or zinc portion (24) is annular and the copper or brass portion (23) is sleeve-shaped.

9. A method according to any one of claims 1, 6 or 7, **characterised in that** the aluminium or zinc portion (24) as well as the copper or brass portion (23) are sleeve-shaped, wherein the aluminium or zinc portion (24) has a frontal collar with an enlarged outer diameter.

10. A method according to any one of claims 1, 6 and 7 to 9, **characterised in that** after decreasing or increasing the radial diameter of the aluminium or zinc portion (24), collector blades are formed by separating the copper or brass portion (25) or the aluminium or zinc portion (24), respectively.

## Revendications

1. Procédé de fabrication d'un collecteur (22) pour un dispositif de commutation (17) destiné à transmettre du courant à un induit (16) d'une machine électrique, en particulier d'un moteur de démarrage (4) pour un moteur à combustion interne, dans lequel une partie de contact (23) du collecteur (22) en forme de bague ou de douille, devant être mise en contact avec un balai, et une partie de liaison (24) du collecteur (22) en forme de bague ou de douille, devant être reliée à un enroulement d'induit, sont emboîtées l'une dans l'autre avec différents diamètres, dans lequel la partie de contact (23) et la partie de liaison (24) sont constituées de matériaux différents, et après l'emboîtement mutuel, la partie de contact (23) et/ou la partie de liaison (24) sont déformées radialement en direction de l'autre partie, dans lequel la partie de contact (23) contient du cuivre ou du laiton et la partie de liaison (24) contient de l'aluminium ou du zinc, **caractérisé en ce que** la partie en cuivre ou en laiton (23) s'engage radialement autour de la partie en aluminium ou en zinc (24), et le diamètre extérieur de la partie en aluminium ou en zinc (24) située à l'intérieur est augmenté.

2. Procédé selon la revendication 1, **caractérisé en ce que** le matériau de la partie de contact (23) a une conductibilité électrique sensiblement identique ou supérieure au matériau de la partie de liaison (24).

3. Procédé selon la revendication 1 ou 2, **caractérisé en ce que** le matériau de la partie de contact (23) a une densité plus élevée que le matériau de la partie de liaison (24).

4. Procédé selon l'une des revendications 1 à 3, **caractérisé en ce que** le matériau de la partie de contact (23) a une dureté plus élevée que le matériau de la partie de liaison (24).

5. Procédé selon la revendication 1, **caractérisé en ce que** la déformation de la partie en aluminium ou en zinc (24) s'effectue par un soudage par impulsion électromagnétique (EMPW).

6. Procédé selon la revendication 1 ou 5, **caractérisé en ce que** la partie en aluminium ou en zinc (24) s'engage radialement autour de la partie en cuivre ou en zinc (23) et le diamètre intérieur de la partie en aluminium ou en zinc (24) est réduit.

7. Procédé selon la revendication 1, **caractérisé en ce que** la partie en cuivre ou en laiton (23) est supportée par le côté d'un outil de moulage (26) opposé à la partie en aluminium ou en zinc (24).

8. Procédé selon l'une des revendications 1, 6 ou 7, **caractérisé en ce que** la partie en aluminium ou en zinc (24) est configurée sous forme de bague et la partie en cuivre ou en laiton (23) est configurée sous forme de douille.

9. Procédé selon l'une des revendications 1, 6 ou 7, **caractérisé en ce que** tant la partie en aluminium ou en zinc (24) que la partie en cuivre ou en laiton (23) sont configurées sous forme de douille, dans lequel la partie en aluminium ou en zinc (24) comporte une collerette frontale avec un diamètre extérieur augmenté.

10. Procédé selon l'une des revendications 1, 6 et 7 à 9, **caractérisé en ce qu'**après la réduction ou l'augmentation radiale du diamètre de la partie en aluminium ou en zinc (24), des lames de collecteur sont fabriquées en séparant la partie en cuivre ou en laiton (25) et éventuellement la partie en aluminium ou en laiton (24).
